# EUROPEAN PATENT SPECIFICATION

(11) **EP 4 260 342 B1**
(45) Date of publication and mention of the grant of the patent: **04.09.2024**
(21) Application number: 21805834.5
(22) Date of filing: 14.10.2021
(51) Int. Cl.: G21C 1/07, G21C 15/18, F16K 1/00

(54) **PASSIVE SYSTEM WITH INCREASED RELIABILITY FOR DECAY-HEAT REMOVAL FROM A NUCLEAR REACTOR AND METHOD CARRIED OUT ON THE SYSTEM**
PASSIVES SYSTEM MIT ERHÖHTER ZUVERLÄSSIGKEIT ZUR NACHZERFALLSWÄRMEABFUHR AUS EINEM KERNREAKTOR UND MIT DEM SYSTEM DURCHGEFÜHRTES VERFAHREN
SYSTÈME PASSIF À FIABILITÉ ACCRUE D'ÉVACUATION DE LA CHALEUR DE DÉSINTÉGRATION D'UN RÉACTEUR NUCLÉAIRE ET PROCÉDÉ MIS EN OEUVRE SUR CE SYSTÈME

(30) Priority: 08.12.2020 CZ 20200656
(43) Date of publication of application: 18.10.2023
(73) Proprietor: UJV Rez, A.S., 25068 Husinec-Rez (CZ)
(72) Inventor: HAJEK, Petr, 16500 Praha (CZ)
(74) Representative: Sedlák, Jirí
(86) International application number: PCT/CZ2021/050112
(87) International publication number: WO 2022/122057

(56) References cited:
- CZ-B6- 306 907
- US-A- 4 382 908
- POPE M A ET AL: "Thermal hydraulic challenges of Gas Cooled Fast Reactors with passive safety features", NUCLEAR ENGINEERING AND DESIGN, AMSTERDAM, NL, vol. 239, no. 5, 1 May 2009 (2009-05-01), pages 840 - 854, XP026064436, ISSN: 0029-5493, [retrieved on 20090402], DOI: 10.1016/J.NUCENGDES.2008.10.023
- ZHENG Y ET AL: "Thermohydraulic transient studies of the Chinese 200MWe HTR-PM for loss of forced cooling accidents", ANNALS OF NUCLEAR ENERGY, PERGAMON PRESS, OXFORD, GB, vol. 36, no. 6, 1 June 2009 (2009-06-01), pages 742 - 751, XP026098284, ISSN: 0306-4549, [retrieved on 20090508], DOI: 10.1016/J.ANUCENE.2009.02.007
- DUMAZ ET AL: "Gas-cooled fast reactors-Status of CEA preliminary design studies", NUCLEAR ENGINEERING AND DESIGN, AMSTERDAM, NL, vol. 237, no. 15-17, 31 July 2007 (2007-07-31), pages 1618 - 1627, XP022182499, ISSN: 0029-5493, DOI: 10.1016/J.NUCENGDES.2007.03.018
- MAYER GUSZTÁV ED - SINGH RAM KUMAR ET AL: "Hot duct break transient with two- and three-loop ALLEGRO models", NUCLEAR ENGINEERING AND DESIGN, AMSTERDAM, NL, vol. 370, 5 November 2020 (2020-11-05), XP086385879, ISSN: 0029-5493, [retrieved on 20201105], DOI: 10.1016/J.NUCENGDES.2020.110911
- STUDER ET AL: "CAST3M/ARCTURUS: A coupled heat transfer CFD code for thermal-hydraulic analyzes of gas cooled reactors", NUCLEAR ENGINEERING AND DESIGN, AMSTERDAM, NL, vol. 237, no. 15-17, 31 July 2007 (2007-07-31), pages 1814 - 1828, XP022182516, ISSN: 0029-5493, DOI: 10.1016/J.NUCENGDES.2007.03.016
- EPINEY A ET AL: "Heavy-gas injection in the Generation IV gas-cooled fast reactor for improved decay heat removal under depressurized conditions", NUCLEAR ENGINEERING AND DESIGN, AMSTERDAM, NL, vol. 240, no. 10, 1 October 2010 (2010-10-01), pages 3115 - 3125, XP027355831, ISSN: 0029-5493, [retrieved on 20100928]

## Description

### Technical Field

The invention relates to emergency cooling devices for nuclear reactors comprising multi-way valves with fluid-actuated pin-rotating shut-off members for changing the direction of fluid flow.

### Background Art

Decay-heat removal is a key safety issue for all nuclear reactors, as, unlike other types of thermal power plants, heat production is not zero after the nuclear reactor has been shut down. This is the so-called residual power, which in the first seconds after the shutdown of the reactor reaches units of percent of nominal power and further decreases exponentially. It is therefore produced over a long period of time and must be removed from the active zone itself to prevent it from overheating.

There are many methods for different types of nuclear reactors and systems for decay-heat removal related to them. Extreme demands are placed on these systems in terms of reliability and robustness, as their failure can lead to a severe accident of a nuclear reactor, in which there is a risk of deterministic or large-scale leaks of radiation and radioactive substances. The modern trend is to produce these systems in a so-called passive fashion, which means that the principle of their function is based only on the action of laws of physics (*e.g.,* gravity, magnetism, or pressure difference), and do not need outside interventions such as motor drives, manual opening, or manual launch. The major disadvantage of most of these systems is that it is very difficult to determine whether and to what extent they worked, as their impact is derived from indirect data.

Removal of decay heat from a GFR (Gas-cooled Fast Reactor) nuclear reactor is a very difficult task, because these reactors, unlike other gas-cooled reactors, require an order of magnitude higher thermal power density, *i.e.* producing the same amount of heat in much smaller volume to function, and gases are generally characterized by a low density. Thus, during the operation of the GFR, a relatively large amount of heat is generated in a small space and the coolant present in said space in any moment has an almost negligible heat capacity. The clear conclusion is that in order to cool the reactor in an emergency situation, it is absolutely necessary to maintain a constant flow of coolant through the active zone.

Prior-art decay-heat removal (DHR) system is known for example from US4382908 or DUMAZ P. et al. Nucl. Eng. Des. 2007, vol. 237, pp. 1618-1627. It is a partially passive system relying on a combination of natural convection, *i.e.* gravity, and an active element in the form of a compressor. The whole system contains three key components: a heat exchanger to remove decay heat from the reactor primary circuit, shut-off valves to control the flow of cooling gas through a loop containing said exchanger, and a compressor to improve decay-heat removal in the most severe situations. During normal operation, the main cooling circuit is active, while the DHR system is shut down by valves operating passively on the principle of a pressure difference above and below a sealing surface of the valve. In the event of a failure of the primary cooling circuit, two emergency cooling systems are present: an emergency compressor on the DHR branch being put into operation, which is unavoidable in some situations, and high DHR chimneys passively moving the coolant via a mechanism of natural convection.

The system mentioned in the previous paragraph has several disadvantages which are critical to the safety of the operation of a nuclear reactor. The heat exchanger has a very limited outlet and the cooling gas is forced to flow through the compressor, the presence of which already contradicts the principles of a passive system, *i.e.* the criteria of inherent safety. If the compressor starts failing in a situation where its use is necessary, the DHR loop will be practically blocked, as the high hydraulic resistance of the stopped compressor effectively stops the natural convection. Another element that is problematic from the point of safety and reliability is the overpressure-operated shut-off valve. The requirement for a complete tightness of passive valves is not realistic at high temperatures occurring in GFR. During normal operation conditions, any pressure drop in the active zone leads to a change of flow direction in the DHR line, *i.e.* any leakage of the valves will cause cooling of the entire DHR system and gas flowing in the opposite direction than desired. At the same time, in case of a rapid depressurization of the circuit, for example in the event of an accident with a coolant leak, such a valve can open even when this is not desirable, because pressure conditions in the circuit change abruptly.

The use of passive cooling alone utilizing the height of the chimneys of the DHR system is problematic in the presence of the above-mentioned risk elements. The flow start-up time is likely to be dangerously long, partly due to an obstacle posed by the compressor and partly due to the fundamental shortcoming of this system - there will be either zero flow throughout the DHR system or even flow in the opposite direction due to valve leaks. In both cases, there is going to be a collision between hot helium, which is used as a cooling gas, flowing upwards from the active zone and cold helium currently inside the DHR system. This can overheat the DHR system piping and the active zone itself.

The object of the present invention is to provide a system and a method for removing decay heat from a GFR-type nuclear reactor which uses only passive decay-heat removal, does not contain the above-mentioned critical safety shortcomings, and has high reliability. The use of a valve known from document CZ306907, which makes it possible to change the direction of gas flow in a DHR system consisting of two mutually rotatable disks containing annular segments, while rotation of one of the disks changes the flow direction, seems to be relevant for the construction of the proposed system. However, the valve construction poses a significant safety risk, as due to the size of the contact areas, it would be problematic to ensure complete tightness and there would be a risk of leakage of cooling gas outside the reactor space. Given the size of the moving elements, the valve could also seize up causing a blockage of the whole decay-heat removal circuit.

### Summary of Invention

The present invention describes a system for the removal of decay heat from a nuclear reactor meeting the requirement of nuclear safety for a practically excluded event, which means a condition, state, or event whose occurrence is considered impossible in terms of laws of physics or which is highly unlikely with a high degree of reliability. This critical advantage is achieved by a construction based on a completely passive system, by a specific setting of physical conditions in the DHR circuit when it is to begin to dissipate heat, by minimizing the possibility of a pressure loss in the circuit, and by eliminating safety risks that could be caused by a pressure loss in case it occurs. Furthermore, the present invention describes a method carried out on the system which is based on a constant flow of coolant through the DHR circuit where only the intensity of this flow is regulated and the characteristic of the flowing coolant is changed.

The system consists of three construction elements: a two-channel-preferably coaxial-piping, a heat exchanger, and a device for redirecting the coolant flow.

According to the invention, a two-channel piping-piping arranged such that an inner pipe, through which the refrigerant flows in one direction, is located inside an outer pipe, through which the refrigerant flows in an opposite direction-is constructed in a way that the coolant flows from the reactor to the heat exchanger through the inner pipe and from the heat exchanger to the reactor through the outer pipe. The reason for this arrangement is to eliminate any situation where a high temperature and an overpressure accumulate in any of the pipes at the same time.

The heat exchanger, which is a part of the system according to the present invention, is able to dissipate heat by a natural convection at high temperatures and represents a minimum possible pressure loss in the circuit. From this point of view, the arrangement of the heat-exchange part is absolutely essential to maximize the effect of natural convection, where a hot medium rises through the middle chimney up to the upper edge of heat-exchange pipes, thus maximizing the height difference between hot and cold part of the circuit. The middle chimney is insulated from the rest of the heat exchanger by a layer of thermal insulation to prevent overheating of its supporting parts.

The flow-redirection device is constructed with three types of interconnected shut-off valves, which are controlled by a pressure difference generated on the main circuit by a blower (sometimes also referred to as a compressor). During normal operation conditions of the reactor when the main-circuit blower is in operation, valves providing a parallel uncrossed flow of the coolant through the outer and inner pipes are closed and valves providing a crossed flow of coolant are open. In an emergency state when the main-circuit blower is shut down, the system passively sets itself to a position where the valves providing the parallel uncrossed flow of the coolant through the outer and inner pipes are open and, vice versa, the valves providing the crossed flow of the coolant are closed.

Under normal operation conditions, the coolant flows from the outer channel of the coaxial piping connecting the flow-redirection device with the reactor pressure vessel, in other words from a cold branch of the main circuit, into the inner channel of the coaxial piping connecting the flow-redirection device with the heat exchanger. Furthermore, the flow-redirection device leads the coolant flow from the outer channel of the coaxial piping connecting the heat exchanger with the flow-redirection device into the inner channel of the coaxial piping connecting the flow-redirection device with the reactor pressure vessel, in other words into a hot branch of the main circuit. The flow-redirection device is passively set to this position by an overpressure on the reactor active zone and passes through at most units of percent of the nominal coolant flow provided by the main-circuit blower. Due to the overpressure in the active zone and partly by a natural convection, the coolant flows from the outer channel of the coaxial piping into the inner channel of the coaxial piping and further into the heat exchanger where it is cooled. From the heat exchanger, the coolant flows into the outer channel of the coaxial piping and further into an outlet of the active zone where it mixes with the hot coolant of the main circuit. Therefore, the DHR is always in operation, and thus its functionality can be continuously monitored, which in principle increases the reliability of the system even more.

In an emergency event where the main-circuit blower fails, and thus cooling of the active zone by the main circuit is lost, the overpressure in the active zone disappears, passively setting the flow-redirection system to a decay-heat-removal mode by changing setting of the valve set in the flow-redirection device. Due to natural convection, the coolant from the outlet of the active zone now flows through the inner channel of the coaxial piping to the heat exchanger where it is cooled. From the heat exchanger, the coolant flows into the outer channel of the coaxial piping and further into an inlet of the active zone.

The system according to the present invention and the method carried out on the system are thus completely passive and meet the requirement of increased reliability. The coolant flow is caused solely by a mechanism of convection without the use of any active elements, such as a compressor, and therefore the system meets the requirement of nuclear safety for a practically excluded event. Such a decay-heat-removal system is always in operation, so there is no need to physically connect it to the reactor pressure vessel by means of active or passive elements, which contributes to the increased reliability of this system. Since there already is a minimum flow of coolant through the system flowing in the right direction during normal reactor operation and no flow reversal takes place when the decay-heat-removal mode is activated, the start-up of this mode is fast, as there is no need to wait for the natural flow of the coolant to the heat exchanger to start. From the principles of the method of coolant flow through the flow-redirection device, the invention provides a further advantage in the form of an elimination of heat losses of the reactor power during normal operation while maintaining the coolant flow through the DHR circuit.

### Brief Description of Drawings

**Fig.1**

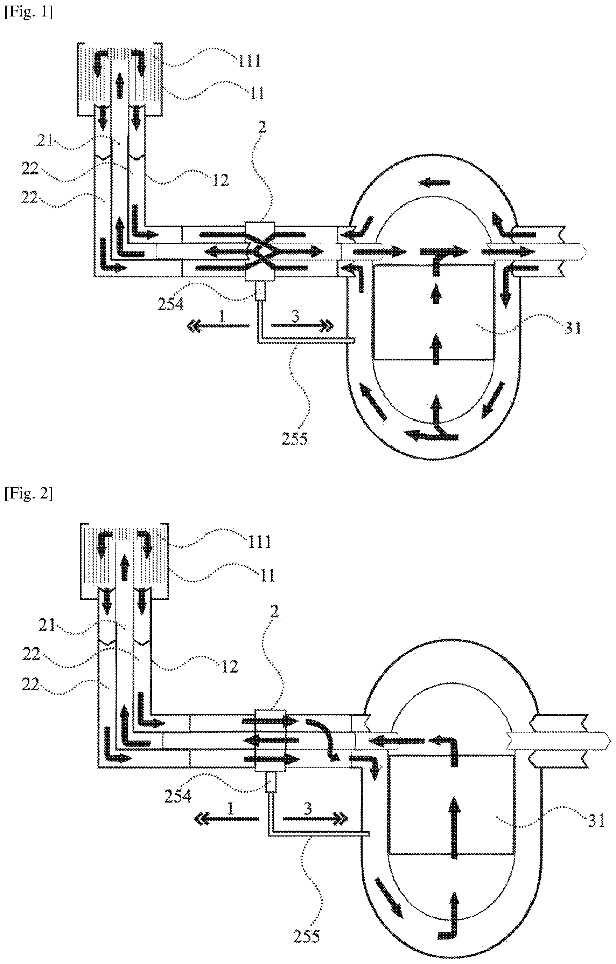

   [Fig.1] depicts a schematic embodiment of the system under normal operation conditions.
**Fig.2**
   [Fig.2] depicts a schematic embodiment of the system in the decay-heat-removal mode.
**Fig.3**

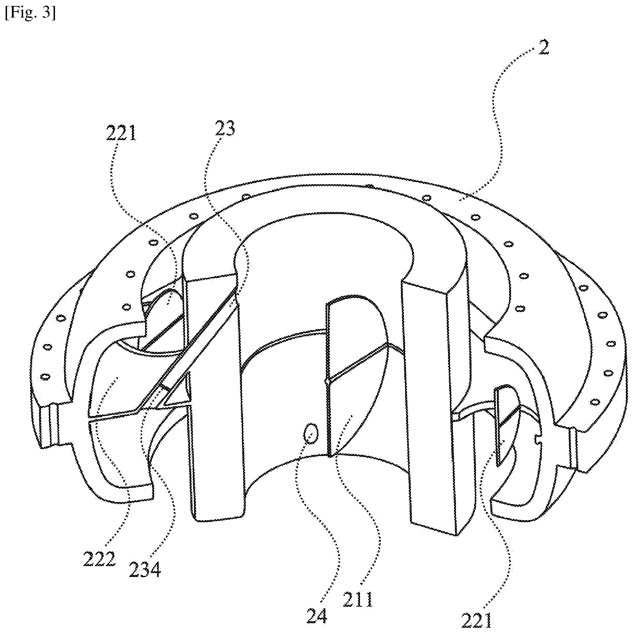

   [Fig.3] depicts an axonometric sectional view of the flow-redirection device.

### Description of Embodiments

### Example 1

Example 1 describes a system for decay-heat removal from a nuclear reactor with increased reliability.

Chimney 12 formed by a coaxial piping ending with a heat exchanger 11 is connected via a flow-redirection device 2 to a coaxial piping exiting an active zone 31 of a reactor. The heat exchanger 11 contains 810 straight heat-exchange pipes 111 arranged around an opening of an inner channel 21 and inside an opening of an outer channel 22 and connected to a heat sink in a form of a water tank placed on a roof of a containment building with submerged water-water-type heat exchanger cooling a pressurized water flowing from the heat-exchange pipes 111 of the heat exchanger 11. The flow-redirection device 2 comprises an inner channel 21 equipped with a butterfly valve 211 separating a segment of the channel 21 on the side 3 adjacent to the active zone 31 of the reactor from a segment of the channel 21 on the side 1 adjacent to the heat exchanger 11 and an outer channel 22 equipped with four butterfly valves 221 equally distributed in a partition 222 separating a segment of the channel 22 on the side 3 adjacent to the active zone 11 of the reactor from a segment of the channel 22 on the side 1 adjacent to the heat exchanger 11, while axes of rotation of the butterfly valves 221 are rotated by 90° relative to the axes of two adjacent valves in the case of each individual valve 221. Furthermore, the segment of the channel 21 on the side 1 adjacent to the heat exchanger 11 is connected to the segment of the channel 22 on the side 3 adjacent to the active zone 11 of the reactor by two transversal connecting channels 23 and the segment of the channel 22 on the side 1 adjacent to the heat exchanger 11 is connected to the segment of the channel 21 on the side 3 adjacent to the active zone 11 of the reactor by two transversal connecting channels 24. The two transversal connecting channels 23 are placed opposite to each other in mirror symmetry and the two transversal connecting channels 24 are also placed opposite to each other in mirror symmetry. The two transversal connecting channels 23 and the two transversal connecting channels 24 are each equipped with a butterfly valve 234. The butterfly valve 211, the four butterfly valves 221, and the four butterfly valves 234 are each operated by a pressure change in the active zone 31 of the reactor, so that in case of an overpressure in the active zone 31 of the reactor, the butterfly valve 211 and the four butterfly valves 221 are in a closed position and the four butterfly valves 234 are in an open position, and in case of a pressure loss in the active zone 31 of the reactor, the butterfly valve 211 and the four butterfly valves 221 are in an open position and the four butterfly valves 234 are in a closed position. The control by a pressure change in the active zone 31 of the reactor is provided by a movement of a lever actuated by a piston equipped with a spring located in a cylinder 254 connected via a signaling tube 255 to the active zone 31 of the reactor.

### Example 2

Example 2 describes a method carried out on the system for decay-heat removal from a nuclear reactor with increased safety.

Pressure in the active zone 11 of the reactor acting on the piston via the signaling tube 255 decreases, thereby reducing a value of compressive force acting on the piston below a value of compressive force exerted by the spring on the opposite side of the piston. By moving the piston, the lever controlling the butterfly valve 211, the four butterfly valves 221, and the four butterfly valves 234 simultaneously moves, whereby the valve 211 and the four valves 221 open, and conversely the four valves 234 close. This changes a helium-which is used as a coolant-flow from 2 % of a nominal helium flow through a main-circuit blower to a value orders of magnitude higher, while natural convection actuates the flow, so that the helium flowing from the segment of the outer channel 22 on the side 1 adjacent to the heat exchanger 11 into the segment of the inner channel 21 on the side 3 adjacent to the active zone 31 of the reactor redirects to the segment of the outer channel 22 on the side 3 adjacent to the active zone 31 of the reactor and the helium flowing into the segment of the inner channel 21 on the side 1 adjacent to the heat exchanger 11 from the segment of the outer channel 22 on the side 3 adjacent to the active zone 31 of the reactor redirects so that the helium flows into the segment of the inner channel 21 on the side 1 adjacent to the heat exchanger 11 from the segment of the inner channel 21 on the side 3 adjacent to the active zone 31 of the reactor. Hot helium flows through the inner channel 21 by a mechanism of convection through the chimney 12 to the heat exchanger 11 up to the upper edge of the heat-exchange pipes 111 to maximize the height difference between the hot and the cold part of the circuit. The helium flows downwards through space between the heat-exchange pipes 111 while pressurized water flows upwards inside the heat-exchange pipes 111. Cooled helium descends through the outer channel 22 by a mechanism of convection through the chimney 12 from the heat exchanger 11, then enters the active zone 31 of the reactor and cools it.

### Industrial Applicability

Passive system with increased reliability for decay-heat removal from a nuclear reactor and method carried out on the system are industrially applicable especially in gas-cooled fast reactors used in nuclear energetics and nuclear research while meeting the requirement of nuclear safety for a practically excluded event.

## Claims

1. Passive system with increased reliability for decay-heat removal from a nuclear reactor, comprising a heat exchanger (11) connected to a chimney (12) formed by a two-channel piping comprising an inner and an outer pipe; **characterised by**
a flow-redirection device (2) separating a two-channel piping of the chimney (12) from a two-channel piping connected to an active zone (31) of the reactor, while the flow-redirection device (2) comprises an inner channel (21) equipped with a valve (211) separating a segment of the channel (21) on the side (3) adjacent to the active zone (31) of the reactor from a segment of the channel (21) on the side (1) adjacent to the heat exchanger (11) and an outer channel (22) equipped with at least one valve (221) in a partition (222) separating a segment of the channel (22) on the side (3) adjacent to the active zone (31) of the reactor from a segment of the channel (22) on the side (1) adjacent to the heat exchanger (11), wherein the segment of the channel (21) on the side (1) adjacent to the heat exchanger (11) is connected to the segment of the channel (22) on the side (3) adjacent to the active zone (31) of the reactor by at least one connecting channel (23) and the segment of the channel (22) on the side (1) adjacent to the heat exchanger (11) is connected to the segment of the channel (21) on the side (3) adjacent to the active zone (31) of the reactor by at least one connecting channel (24), wherein each of the connecting channels (23) and connecting channels (24) is equipped with at least one valve (234).

2. Passive system according to claim 1, **characterized in that** each of the valves (211), valves (221), and valves (234) is controlled by a pressure change in the active zone (31) of the reactor, wherein in case of an overpressure in the active zone (31) of the reactor, each of the valves (211) and valves (221) is in a closed position and each of the valves (234) is in an open position, and in case of a pressure loss in the active zone (31) of the reactor, each of the valves (211) and valves (221) is in an open position and each of the valves (234) is in a closed position.

3. Passive system according to claim 2, **characterized in that** the control by a pressure change in the active zone (31) of the reactor is provided by a lever actuated by a piston equipped with a spring located in a cylinder (254) connected via a signaling tube (255) to the active zone (31) of the reactor.

4. Passive system according to any of claims 1 to 3, **characterized in that** each of the valves (211), valves (221), and valves (234) is a butterfly valve.

5. Passive system according to any of claims 1 to 4, **characterized in that** the heat exchanger (11) comprises heat-exchange pipes (111) placed around an opening of the inner channel (21) and inside an opening of the outer channel (22), wherein the heat-exchange pipes (111) are connected to a heat sink.

6. Method for removing decay heat from a nuclear reactor carried out on a system according to any of claims 1 to 5, **characterized in that** a pressure in the active zone (31) of the reactor acting on the piston via the signaling tube (255) decreases, thereby reducing a value of compressive force acting on the piston below a value of compressive force exerted by the spring on the opposite side of the piston, by moving the piston, the lever controlling valves simultaneously moves, whereby each of the valves (211) and valves opens, and conversely each of the valves (234) closes, thereby changing a coolant flow in the system to an order of magnitude higher by a mechanism of convection so that the coolant flowing from the segment of the outer channel (22) on the side (1) adjacent to the heat exchanger (11) into the segment of the inner channel (21) on the side (3) adjacent to the active zone (31) of the reactor redirects into the segment of the outer channel (22) on the side (3) adjacent to the active zone (31) of the reactor and the coolant flowing into the segment of the inner channel (21) on the side (1) adjacent to the heat exchanger (11) from the segment of the outer channel (22) on the side (3) adjacent to the active zone (31) of the reactor redirects so that the coolant flows into the segment of the inner channel (21) on the side (1) adjacent to the heat exchanger (11) from the segment of the inner channel (21) on the side (3) adjacent to the active zone (31) of the reactor.

7. Method according to claim 6, **characterized in that** the coolant rises through the inner channel (21) by a mechanism of convection through the chimney (12) to the heat exchanger (11) up to the upper edge of the heat-exchange pipes (111), then the coolant flows downwards through space between the heat-exchange pipes (111) while pressurized water flows upwards inside the heat-exchange pipes (111) and the coolant further descends through the outer channel (22) by a mechanism of convection through the chimney (12) from the heat exchanger (11) and enters the active zone (31) of the reactor.

## Patentansprüche

1. Passives System mit erhöhter Zuverlässigkeit zur Abfuhr von Zerfallswärme aus einem Kernreaktor, umfassend einen Wärmetauscher (11), der mit einem Kamin (12) verbunden ist, der durch eine zweikanalige Rohrleitung gebildet wird, die ein inneres und ein äußeres Rohr umfasst, **gekennzeichnet durch** eine Strömungsumlenkvorrichtung (2), die eine zweikanalige Rohrleitung des Kamins (12) von einer zweikanaligen Rohrleitung trennt, die mit einer aktiven Zone (31) des Reaktors verbunden ist, während die Strömungsumlenkvorrichtung (2) einen inneren Kanal (21) umfasst, der mit einem Ventil (211) ausgestattet ist, das einen Abschnitt des Kanals (21) auf der an die aktive Zone (31) des Reaktors angrenzende Seite (3), von einem Abschnitt des Kanals (21) auf der an den Wärmetauscher (11) angrenzenden Seite (1) und einem äußeren Kanal (22), der mit mindestens einem Ventil (221) in einer Trennwand (222) ausgestattet ist, die einen Abschnitt des Kanals (22) auf der an die aktive Zone (31) des Reaktors angrenzenden Seite (3) von einem Abschnitt des Kanals (22) auf der an den Wärmetauscher (11) angrenzenden Seite (1) trennt, wobei der Abschnitt des Kanals (21) auf der an den Wärmetauscher (11) angrenzenden Seite (1) mit dem Abschnitt des Kanals (22) auf der an die aktive Zone (31) des Reaktors angrenzenden Seite (3) durch mindestens einen Verbindungskanal (23) verbunden ist und der Abschnitt des Kanals (22) auf der an den Wärmetauscher (11) angrenzenden Seite (1) mit dem Abschnitt des Kanals (21) auf der an die aktive Zone (31) des Reaktors angrenzenden Seite (3) durch mindestens einen Verbindungskanal (24) verbunden ist, wobei jeder der Verbindungskanäle (23) und Verbindungskanäle (24) mit mindestens einem Ventil (234) ausgestattet ist.

2. Passives System nach Anspruch 1, **dadurch gekennzeichnet, dass** jedes der Ventile (211), Ventile (221) und Ventile (234) durch eine Druckänderung in der aktiven Zone (31) des Reaktors gesteuert wird, wobei im Falle eines Überdrucks in der aktiven Zone (31) des Reaktors jedes der Ventile (211) und Ventile (221) in einer geschlossenen Position ist und jedes der Ventile (234) in einer offenen Position ist, und im Falle eines Druckverlusts in der aktiven Zone (31) des Reaktors jedes der Ventile (211) und Ventile (221) in einer offenen Position ist und jedes der Ventile (234) in einer geschlossenen Position ist.

3. Passives System nach Anspruch 2, **dadurch gekennzeichnet, dass** die Steuerung durch eine Druckänderung in der aktiven Zone (31) des Reaktors durch einen Hebel erfolgt, der von einem Kolben betätigt wird, der mit einer Feder ausgestattet ist, die sich in einem Zylinder (254) befindet, der über ein Signalrohr (255) mit der aktiven Zone (31) des Reaktors verbunden ist.

4. Passives System nach einem der Ansprüche 1 bis 3, **dadurch gekennzeichnet, dass** jedes der Ventile (211), Ventile (221) und Ventile (234) eine Drosselklappe ist.

5. Passives System nach einem der Ansprüche 1 bis 4, **dadurch gekennzeichnet, dass** der Wärmetauscher (11) Wärmetauscherrohre (111) umfasst, die um eine Öffnung des inneren Kanals (21) und innerhalb einer Öffnung des äußeren Kanals (22) angeordnet sind, wobei die Wärmetauscherrohre (111) mit einem Kühlkörper verbunden sind.

6. Verfahren zum Abführen von Zerfallswärme aus einem Kernreaktor, das an einem System nach einem der Ansprüche 1 bis 5 durchgeführt wird, **dadurch gekennzeichnet, dass** ein Druck in der aktiven Zone (31) des Reaktors, der über das Signalrohr (255) auf den Kolben wirkt, abnimmt, wodurch ein Wert der Druckkraft, die auf den Kolben wirkt, unter einen Wert der Druckkraft reduziert wird, die von der Feder auf die gegenüberliegende Seite des Kolbens ausgeübt wird, durch die Bewegung des Kolbens bewegt sich gleichzeitig der Hebel, der die Ventile steuert, wodurch jedes der Ventile (211) und Ventile öffnet, und umgekehrt jedes der Ventile (234) schließt, wodurch ein Kühlmittelstrom im System durch einen Konvektionsmechanismus in eine höhere Größenordnung geändert wird, so dass das Kühlmittel, das von dem Abschnitt des Außenkanals (22) auf der an den Wärmetauscher (11) angrenzenden Seite (1) in den Abschnitt des Innenkanals (21) auf der an die aktive Zone (31) des Reaktors angrenzenden Seite (3) strömt, in den Abschnitt des Außenkanal (22) auf der an die aktive Zone (31) des Reaktors angrenzenden Seite (3) und das in den Abschnitt des Innenkanals (21) auf der an den Wärmetauscher (11) angrenzenden Seite (1) strömende Kühlmittel aus dem Abschnitt des Außenkanals (22) auf der an die aktive Zone (31) des Reaktors angrenzenden Seite (3) umgelenkt wird, so dass das Kühlmittel aus dem Abschnitt des Innenkanals (21) auf der an die aktive Zone (31) des Reaktors angrenzenden Seite (3) in den Abschnitt des Innenkanals (21) auf der an den Wärmetauscher (11) angrenzenden Seite (1) strömt.

7. Verfahren nach Anspruch 6, **dadurch gekennzeichnet, dass** das Kühlmittel durch den inneren Kanal (21) durch einen Konvektionsmechanismus durch den Kamin (12) zum Wärmetauscher (11) bis zur Oberkante der Wärmetauscherrohre (111) aufsteigt, das Kühlmittel dann nach unten durch den Raum zwischen den Wärmetauscherrohren (111) strömt, während Druckwasser innerhalb der Wärmetauscherrohre (111) nach oben strömt und das Kühlmittel weiter durch den Außenkanal (22) durch einen Konvektionsmechanismus durch den Kamin (12) vom Wärmetauscher (11) nach unten strömt und in die aktive Zone (31) des Reaktors eintritt.

## Revendications

1. Système passif à fiabilité accrue pour l'évacuation de la chaleur résiduelle d'un réacteur nucléaire comprenant un échangeur de chaleur (11) relié à une cheminée (12) formée par un tuyau à deux canaux comprenant un tuyau interne et un tuyau externe, **caractérisé par** un dispositif de redirection de flux (2) séparant le tuyau à deux canaux de la cheminée (12) du tuyau à deux canaux reliée à la zone active (31) du réacteur, le dispositif de redirection de flux (2) comprenant un canal interne (21) équipé d'une vanne (211) séparant un segment du canal (21) du côté (3) adjacent à la zone active (31) du réacteur d'un segment du canal (21) du côté (1) adjacent à l'échangeur de chaleur (11), et un canal externe (22) équipé d'au moins une vanne (221) dans une cloison (222) séparant un segment du canal (22) du côté (3) adjacent à la zone active (31) du réacteur d'un segment du canal (22) sur le côté (1) adjacent à l'échangeur de chaleur (11), le segment du canal (21) du côté (1) adjacent à l'échangeur de chaleur (11) étant relié au segment du canal (22) du côté (3) adjacent à la zone active (31) du réacteur par au moins un canal de liaison (23) et le segment du canal (22) du côté (1) adjacent à l'échangeur de chaleur (11) étant relié au segment du canal (21) du côté (3) adjacent à la zone active (31) du réacteur par au moins un canal de liaison (24), chacun des canaux de liaison (23) et des canaux de liaison (24) étant équipé d'au moins une vanne (234).

2. Système passif selon la revendication 1, **caractérisé en ce que** chacune des vannes (211), des vannes (221) et des vannes (234) est commandée par un changement de pression dans la zone active (31) du réacteur, où, en cas de surpression dans la zone active (31) du réacteur, chacune des vannes (211) et des vannes (221) est dans la position fermée et chacune des vannes (234) est dans la position ouverte, et en cas de perte de pression dans la zone active (31) du réacteur, chacune des vannes (211) et des vannes (221) est dans la position ouverte et chacune des vannes (234) est dans la position fermée.

3. Système passif selon la revendication 2, **caractérisé en ce que** la commande par changement de pression dans la zone active (31) du réacteur est assurée par un levier actionné par un piston équipé d'un ressort situé dans un cylindre (254) relié par l'intermédiaire d'un tube de signalisation (255) à la zone active (31) du réacteur.

4. Système passif selon l'une des revendications 1 à 3, **caractérisé en ce que** chacune des vannes (211), vannes (221) et vannes (234) est une vanne papillon.

5. Système passif selon l'une des revendications 1 à 4, **caractérisé en ce que** l'échangeur de chaleur (11) comprend des tubes d'échange de chaleur (111) disposés autour d'une ouverture du canal intérieur (21) et à l'intérieur d'une ouverture du canal extérieur (22), les tubes d'échange de chaleur (111) étant reliés à un dissipateur de chaleur.

6. Méthode d'évacuation de la chaleur résiduelle d'un réacteur nucléaire mis en oeuvre sur un système selon l'une des revendications 1 à 5, **caractérisée en ce que** la pression dans la zone active (31) du réacteur agissant sur le piston par l'intermédiaire du tube de signalisation (255) diminue, réduisant ainsi la valeur de la force de compression agissant sur le piston en dessous de la valeur de la force de compression exercée par le ressort sur le côté opposé du piston, en déplaçant le piston, le levier de commande des vannes se déplace simultanément, de sorte que chacune des vannes (211) et des vannes s'ouvre, et inversement chacune des vannes (234) se ferme, modifiant ainsi le flux du liquide de refroidissement dans le système à un ordre de grandeur supérieur par un mécanisme de convection de sorte que le liquide de refroidissement s'écoulant depuis le segment du canal extérieur (22) du côté (1) adjacent à l'échangeur de chaleur (11) vers le segment du canal intérieur (21) du côté (3) adjacent à la zone active (31) du réacteur est redirigé vers le segment du canal extérieur (22) du côté (3) adjacent à la zone active (31) du réacteur et le liquide de refroidissement s'écoulant vers le segment du canal intérieur (21) du côté (1) adjacent à l'échangeur de chaleur (11) depuis le segment du canal extérieur (22) du côté (3) adjacent à la zone active (31) du réacteur est redirigé de sorte que le liquide de refroidissement s'écoule vers le segment du canal intérieur (21) du côté (1) adjacent à l'échangeur de chaleur (11) depuis le segment du canal intérieur (21) du côté (3) adjacent à la zone active (31) du réacteur.

7. Méthode selon la revendication 6, **caractérisée en ce que** le liquide de refroidissement monte à travers le canal intérieur (21) par un mécanisme de convection à travers la cheminée (12) jusqu'à l'échangeur de chaleur (11) jusqu'au bord supérieur des tubes d'échange de chaleur (111), puis le liquide de refroidissement s'écoule vers le bas à travers l'espace entre les tubes d'échange de chaleur (111) tandis que de l'eau sous pression s'écoule vers le haut à l'intérieur des tubes d'échange de chaleur (111) et le liquide de refroidissement descend encore à travers le canal extérieur (22) par un mécanisme de convection à travers la cheminée (12) depuis l'échangeur de chaleur (11) et entre dans la zone active (31) du réacteur.
